# EUROPÄISCHE PATENTANMELDUNG

(11) **EP 2 241 826 A1**
(43) Veröffentlichungstag der Anmeldung: **20.10.2010**
(21) Anmeldenummer: 10007322.0
(22) Anmeldetag: 15.07.2010
(51) Int. Cl.: F24C 15/20, F24C 14/00, A47L 15/42, D06F 58/20, C02F 1/32

(54) **Haushaltsgerät mit Photokatalysator**

(30) Priorität: 28.01.2010 EP 10000848
(71) Anmelder: V-Zug AG, 6301 Zug (CH)
(72) Erfinder: Teuber, Josef, 6232 Geuensee (CH)
(74) Vertreter: Sutter, Kurt

(57) **Zusammenfassung**

Ein Haushaltgerät, wie z.B. ein Backofen, ein Dunstabzug, ein Geschirrspüler, eine Waschmaschine, ein Wäschetrockner oder ein Wäschetrockenschrank, wird mit einem Photokatalysator (10) ausgestattet, mit welchem Prozesswasser oder Prozessluft aufbereitet werden kann. Der Photokatalysator (10) kann z.B. in einem Luft- bzw. Prozesswasserkreislauf angeordnet sein.

## Beschreibung

### Gebiet der Erfindung

Die Erfindung betrifft ein Haushaltgerät mit Photokatalysator, insbesondere eine Waschmaschine, einen Wäschetrockner, einen Wäschetrockenschrank, einen Wäscheauffrischungsschrank, einen Backofen, einen Geschirrspüler oder einen Dunstabzug.

### Hintergrund

Es sind verschiedene Haushaltgeräte bekannt, welche ein Fluid, insbesondere Luft oder Wasser, bearbeiten, fördern oder als Prozessmedium einsetzen. Namentlich seien hier als Beispiele Geschirrspüler, Waschmaschinen, Wäschetrockner, Wäschetrockenschränke, Backöfen oder Dampfabzüge genannt.

In derartigen Geräten ist es oftmals nötig, das Fluid in einer gewissen Art und Weise zu reinigen oder aufzubereiten. Hierzu sind, je nach Gerät, unterschiedliche Mittel vorgesehen, beispielsweise Filter, Trockner, Duftquellen, Abscheider oder dergleichen.

### Darstellung der Erfindung

Es stellt sich die Aufgabe, die Reinigung oder Aufbereitung des Fluids zu verbessern.

Anspruchsgemäss wird diese Aufgabe gelöst, indem das Haushaltgerät einen Photokatalysator und eine Lichtquelle zum Aktivieren des Photokatalysators aufweist. Dieser Photokatalysator kann mit dem aufzubereitenden Fluid in Verbindung gebracht werden.

Vorzugsweise ist eine Katalysatorstrecke im Gerät vorgesehen, welche zwischen einem Anfangs- und einem Endpunkt verläuft und entlang welcher der Photokatalysator angeordnet ist. Das Haushaltgerät ist dazu ausgestaltet, das Fluid vom Anfangs- zum Endpunkt durch die Katalysatorstrecke zu fördern. Der Pfad des Fluids durch die Katalysatorstrecke ist jedoch länger als der Abstand zwischen Anfangs- und Endpunkt, so dass auch der Interaktionsweg länger ist. Hierzu kann mindestens ein Teil der Katalysatorstrecke in geeigneter Weise gefaltet oder aufgerollt werden, beispielsweise indem er mäanderförmig, spiralförmig oder helixförmig verläuft.

Eine weitere alternativ oder kumulativ hierzu einsetzbare Möglichkeit, um den Interaktionsweg effektiv zu verlängern, ergibt sich, wenn das Fluid in einem Zyklus wiederholt dem Photokatalysator entlang geführt wird, so dass es immer wieder mit ihm in Kontakt kommt.

Beim Haushaltgerät kann es sich beispielsweise um einen Backofen oder einen Dunstabzug halten, bei welchem die Abluft aus der Muffel bzw. vom Herd am Photokatalysator entlang geführt wird, um dort insbesondere organische Verbindungen abzubauen.

Eine weitere Vorteilhafte Anwendung der Erfindung hat die Form eines Wäschetrockners, eines Wäschetrockenschranks oder eines Wäscheauffrischungsschranks. Vorzugsweise wird die Prozessluft in einem Prozessluftkreislauf am Photokatalysator vorbei geführt.

Andere Anwendungen beziehen sich auf die Reinigung oder Aktivierung von Prozesswasser.

In einer besonders vorteilhaften Ausführung besitzt das Haushaltgerät ein Fördermittel zum Fördern des Fluids, wobei mindestens ein Teil des Photokatalysators beim oder am Fördermittel angeordnet ist. Diese Anordnung hat den Vorteil, dass in diesem Bereich ein besonders intensiver Kontakt zwischen Fluid und den mechanischen Teilen der Geräts besteht, so dass sich die Katalysatorwirkung gut entfalten kann.

Insbesondere kann mindestens ein Teil des Photokatalysators an einem zur Bewegung angetriebenen Teil des Fördermittels, wie z.B. an den Flügeln eines Lüfterrads, eines Propellers oder einer Pumpe, aufgebracht sein.

Beispielsweise kann das Haushaltgerät ein Geschirrspüler oder eine Waschmaschine sein, deren Prozesswasser dem Photokatalysator entlang geführt wird.

Der Photokatalysator ist vorzugsweise dazu geeignet, unter Beleuchtung organische Verbindungen abzubauen. Beispielsweise enthält er hierzu Titanoxid. Weitere Verbindungen sind in der folgenden Beschreibung aufgeführt.

Wie anhand der folgenden Beispiele illustriert wird, ist es überraschenderweise möglich, die Massnahme mit hohem Nutzen in einer Vielzahl unterschiedlicher Geräte einzusetzen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung eines Geschirrspülers mit Photokatalysator,
Fig. 2 eine schematische Darstellung einer Waschmaschine mit Photokatalysator,
Fig. 3 eine schematische Darstellung eines Backofens mit Photokatalysator,
Fig. 4 eine schematische Darstellung eines Wäschetrockners mit Photokatalysator,
Fig. 5 eine schematische Darstellung eines Wäschetrockenschrankes oder Wäscheauffrischungsschrankes mit Photokatalysator,
Fig. 6 eine schematische Darstellung einer zweiten Ausführung eines Backofens mit Photokatalysator.

### Wege zur Ausführung der Erfindung

Definitionen, einführende Bemerkungen:
Der Begriff Fluid" beschreibt eine fliessfähige Substanz, insbesondere ein Gas oder eine Flüssigkeit, insbesondere ein Luftgemisch oder Wasser.

Unter Luftgemisch" ist ein Gemisch zu verstehen, dessen primärer Bestandteil Luft ist, und dem weitere Stoffe, wie z.B. Dampf, organische Verunreinigungen oder dergleichen beigemischt sein können.

Unter "Photokatalysator" wird ein Stoff verstanden, der bei Beleuchtung mit Licht geeigneter Wellenlänge, insbesondere sichtbarem oder ultraviolettem Licht, als Katalysator wirkt.

Der Photokatalysator ist vorzugsweise ein Katalysator auf der Basis von Titanoxid, d.h. ein Katalysator, der z.B. TiO₂ (Titandioxid) enthält, denkbar sind beispielsweise jedoch auch Katalysatoren basierend auf CdS (Kadmiumsulfid), WO₃ (Wolframoxid) oder ZO (Zinkoxid). Geeignete Fotokatalysatoren sind beispielsweise in DE 20 2004 005 677 U1 und EP 1 205 244 beschrieben. Sie erzeugen bei Lichtabsorption Elektronen und Löcher und induzieren dadurch chemische Reaktionen, welche organische Verbindungen abbauen und Mikroorganismen und Viren abzutöten vermögen. Besonders bevorzugt sind Katalysatoren auf der Basis von Titandioxid aufgrund der hohen Effizienz und biologischen Verträglichkeit dieses Materials.

Beispielsweise kann als Fotokatalysator das Produkt "Titan Shield^{®}" der Firma EcoWays Umwelt Innovationen GmbH, Jülich (DE) eingesetzt werden.

### Erste Ausführung, Geschirrspüler

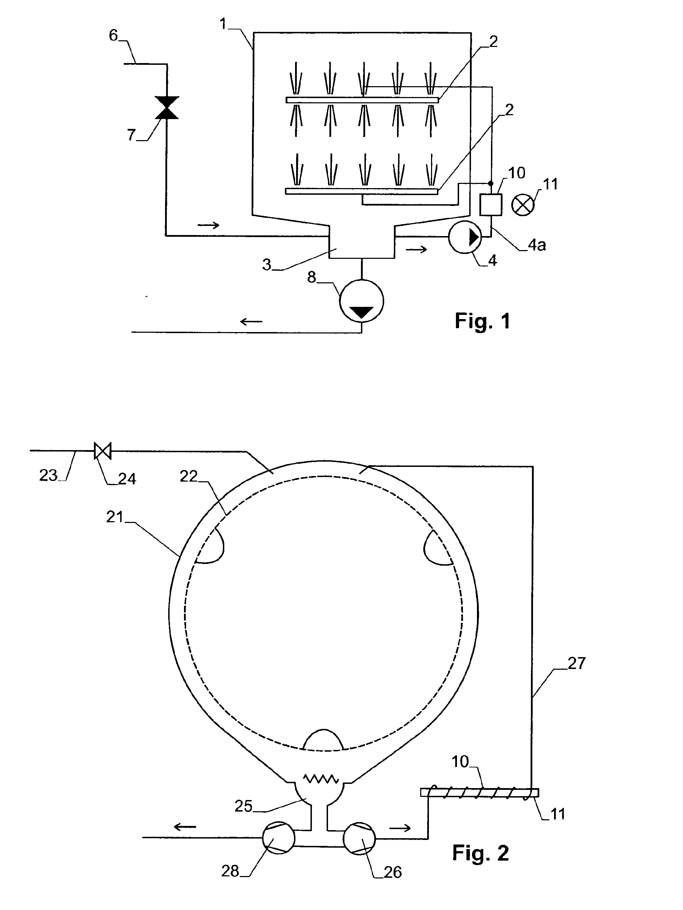

Fig. 1 zeigt einen Geschirrspüler mit einem Bottich 1 zur Aufnahme des zu reinigenden Geschirrs. Hierzu sind im Bottich 1 in bekannter Weise Geschirrkörbe vorgesehen (nicht gezeigt). Im Bottich 1 sind weiter z.B. zwei drehbare Sprüharme 2 angeordnet, mit denen Prozesswasser in den Bottich eingebracht werden kann. Um Prozesswasser aus dem Sumpf 3 des Bottichs zu den Sprüharmen 2 zu fördern, ist eine Pumpe 4 vorgesehen, welche das Prozesswasser durch eine Zirkulationsleitung 4a fördert. Weiter umfasst das Gerät nach Fig. 1 beispielhaft eine Frischwasserzufuhr 6, von welcher über ein Ventil 7 und eine nicht eingezeichnete, optionale Wasseraufbereitung (Enthärtung) Frischwasser in den Bottich 1 eingebracht werden kann, sowie eine Ablaufpumpe 8, mit welcher verbrauchtes Prozesswasser abgeführt wird.

Im Gerät nach Fig. 1 ist eine Katalysatorstrecke 10 mit einem Photokatalysator vorgesehen, der von einer Lichtquelle 11 zur Katalyse aktiviert werden kann. Grundsätzlich kann der Photokatalysator innerhalb oder ausserhalb des Bottichs 1 angeordnet werden. Bevorzugt ist jedoch die Anordnung ausserhalb des Bottichs 1 am Weg des Wassers vom Bodenbereich 3 zu den Sprüharmen 2, namentlich an der Zirkulationsleitung 4a.

Die Katalysatorstrecke 10 kann beispielsweise als transparenter Abschnitt des Zirkulationsrohrs 4a ausgestaltet sein, an dessen Innenseite der Photokatalysator angebracht ist und das von aussen von der Lichtquelle 11 beleuchtet ist.

Indem der Photokatalysator am Prozesswasserkreislauf angeschlossen ist, kommt das Wasser immer wieder in Kontakt mit ihm, so dass organische Verbindungen dauernd abgebaut und Mikroorganismen abgetötet werden können.

Denkbar ist, dass der Photokatalysator auch nur in einem Teil der Spülgänge mit dem Prozesswasser in Kontakt gebracht wird, z.B. während dem Klarspülen.

In einer anderen Ausführung des Geschirrspülers kann zusätzlich oder alternativ zur Anordnung nach Fig. 1 der Photokatalysator so angeordnet sein, dass er mit der Luft vom Bottich 1 in Kontakt kommt, so dass in der Luft organische Verbindungen abgebaut und so Gerüche reduziert und Mikroorganismen abgetötet werden können. Dies ist besonders vorteilhaft während dem Trocknen des Geschirrs oder in Stillstandsphasen des Geschirrspülers, während welcher dieser fortlaufend, beispielsweise über einen Zeitraum von wenigen Tagen, beladen wird. Hierzu kann der Photokatalysator ausserhalb des Bottichs angeordnet sein und die Luft vom Bottich kann aktiv durch den Photokatalysator gefördert werden, oder der Photokatalysator kann auch im Bottich angeordnet und von einer geeigneten Lichtquelle mit Licht beaufschlagt werden.

### Zweite Ausführung, Waschmaschine

Fig. 2 zeigt eine Haushalt-Waschmaschine mit einem Bottich 21, in welchem eine drehbare Trommel 22 mit horizontaler oder vertikaler Drehachse vorgesehen ist. Wasser wird über eine Frischwasserleitung 23 und ein Frischwasserventil 24 zugeführt. Im Bodenbereich des Bottichs 21 ist ein Abfluss 25 vorgesehen, von welchem Wasser über eine Zirkulationspumpe 26 und eine Zirkulationsleitung 27 wieder in einen oberen Bereich gefördert werden kann. Derartige Zirkulationsmechanismen in Waschmaschinen sind dem Fachmann bekannt.

Weiter ist beispielhaft eine Abflusspumpe 28 dargestellt, um nicht mehr benötigtes Prozesswasser aus dem Abfluss 25 in die Kanalisation zu fördern.

Ähnlich wie in der ersten Ausführung ist eine Katalysatorstrecke 10 vorgesehen, welche in dieser Ausführung von einem transparenten, helixförmig verlaufenden Abschnitt der Zirkulationsleitung 4a gebildet wird, an dessen Innenseite der Photokatalysator angeordnet ist. Alternativ zur helixförmigen Leitungsführung kann in eine Leitung ein photoaktiver Katalysatorkörper mit grosser Oberfläche gelegt werden. Die Katalysatorstrecke 10 ist um die Lichtquelle 11 gelegt, welche in dieser Ausführung stabförmig ist.

Durch diese helixförmige Anordnung der Katalysatorstrecke 10 kann die Interaktionslänge mit dem Prozesswasser verlängert werden.

Grundsätzlich kann die Photokatalysatorstrecke wiederum innerhalb oder ausserhalb des Bottichs 21 angeordnet werden. Bevorzugt ist jedoch die Anordnung ausserhalb des Bottichs im Bereich der Zirkulationsleitung 27. Alternativ oder additiv können Teile des Bottichs mit photokatalytischem Material beschichtet werden um die gefürchteten Biofilme zu vermeiden, bzw. zu zerstören.

Auch bei der Waschmaschine ist es denkbar, zusätzlich oder alternativ zur Ausführung nach Fig. 2 den Photokatalysator so anzuordnen, dass er mit der Luft vom Bottich 21 in Kontakt kommt, so dass in der Luft organische Verbindungen abgebaut und so Gerüche reduziert und Mikroorganismen abgetötet werden können. Dies kann insbesondere bei einer Prozessphase gegen Ende des Waschgangs vorteilhaft sein, um Gerüche zu entfernen. Hierzu kann der Photokatalysator ausserhalb des Bottichs 21 angeordnet sein und die Luft vom Bottich 21 kann aktiv durch den Photokatalysator gefördert werden, oder der Photokatalysator kann auch im Bottich 21 angeordnet und von einer geeigneten Lichtquelle mit Licht beaufschlagt werden

### Dritte Ausführung, Backofen

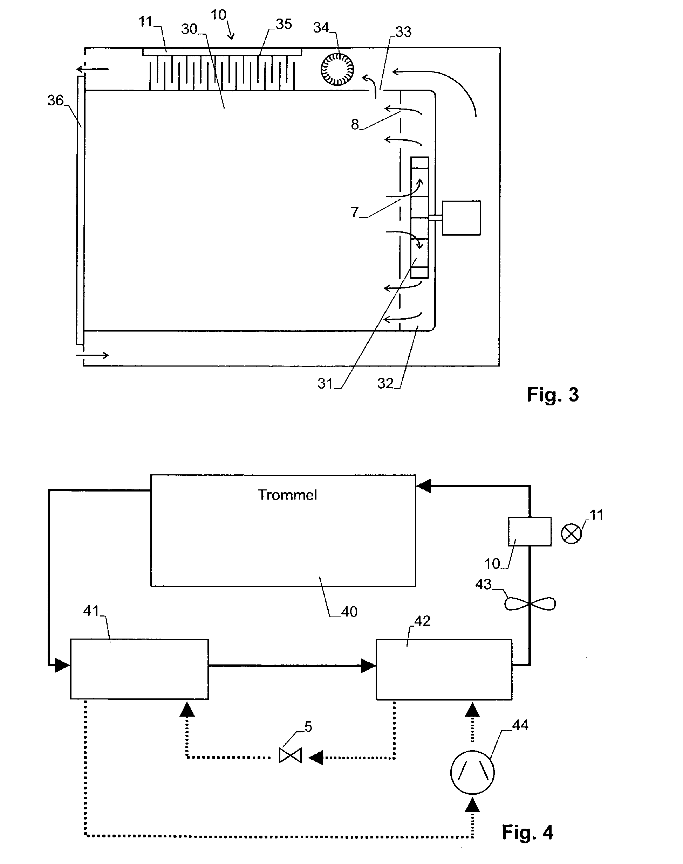

Fig. 3 zeigt einen Backofen mit einer Muffel 30 zur Aufnahme des Garguts. An der Vorderseite der Muffel 30 ist in bekannter Weise eine Türe 36 vorgesehen. An der Rückwand der Muffel 30 ist beispielhaft ein Ventilator 31 in einer Heizkammer 32 dargestellt. In der Heizkammer 32 ist eine Heizung vorgesehen (nicht gezeigt), so dass die Luft im Umluftbetrieb vom Ventilator in die Heizkammer gefördert, dort erwärmt und wieder zurück in die Muffel 30 geblasen werden kann. Zusätzlich oder alternativ hierzu können Heizungen im Boden- und Deckenbereich der Muffel 30 vorgesehen sein.

Zum kontrollierten Entlüften der Muffel 30 ist in der Muffel 30 mindestens eine Öffnung 33 angeordnet, welche verschliessbar sein kann. Ein Querstromlüfter 34 saugt das Luftgemisch aus der Muffel 30 durch die Öffnung 33 an. Der Querstromlüfter 34 saugt zudem auch Luft aus dem Gehäuse an, wodurch eine Kühlung erzeugt wird.

Das Luftgemisch wird vom Querstromlüfter 34 in die Katalysatorstrecke 10 gefördert. Im vorliegenden Beispiel ist die Katalysatorstrecke 10 mäanderförmig ausgelegt und besteht aus Platten 35 in interdigitaler Anordnung, deren Oberflächen beispielsweise mit dem Katalysator bedeckt sind. Die Lampe 11 ist seitlich angeordnet, um Licht zwischen die Platten 35 einzustrahlen. Nach Durchlaufen der Katalysatorstrecke wird die Luft an die Umgebung abgegeben.

Mit der Katalysatorstrecke können auf diese Weise Geruchsstoffe im Luftgemisch entfernt werden.

Grundsätzlich kann alternativ oder zusätzlich zu der ausserhalb der Muffel 30 angeordneten Katalysatorstrecke auch mindestens ein Teil der Innenwand der Muffel als Katalysatorstrecke ausgestaltet werden, indem sie zumindest bereichsweise mit Katalysatormaterial beschichtet wird. Falls die Backraumbeleuchtung ausreichende Leistung hat, um den Katalysator zu aktivieren, wir keine zusätzliche Lichtquelle benötigt. So kann der Photokatalysator auch zur katalytischen Reinigung der Muffel eingesetzt werden.

Denkbar ist weiter auch eine Anordnung der Katalysatorstrecke mit entsprechender Beleuchtung im Heizraum 32. Da die Luft durch den Heizraum 32 zirkuliert wird, ist in diesem Falle eine relativ kurze Katalysatorstrecke ausreichend.

Im weiteren ist auch eine Anordnung denkbar, bei welcher sich die photokatalytische Strecke ausserhalb der Muffel befindet und die Luft z.B. mit einem Ventilator aus der Muffel heraus, über den Photokatalysator und zurück in die Muffel zirkuliert wird.

### Vierte Ausführung, Wäschetrockner

Fig. 4 zeigt einen Wäschetrockner mit einer Trommel 40 als Raum zur Aufnahme der zu trocknenden Wäsche. Die Trommel ist vorzugsweise in bekannter Weise drehbar um eine horizontale Drehachse. Sie ist in der Regel zylindrisch ausgestaltet und besitzt eine frontseitige Beschickungstür. Sie liegt in einem Prozessluftkreislauf, in welchem die Trocknungsluft von der Trommel 40 z.B. durch die Beschickungstüre abgesogen wird. Die Luft gelangt sodann zu einer Kühlvorrichtung 41, von wo sie zu einer Heizvorrichtung 42 und über ein Gebläse 43 radial oder achsial zurück in die Trommel gefördert wird. Kühlvorrichtung 41 und Heizvorrichtung 42 werden vorzugsweise von einer Wärmepumpe 44 betrieben und dienen dazu, die Luft durch Abkühlen zu trocknen und sodann wieder zu erwärmen.

Der Wäschetrockner ist mit einer Katalysatorstrecke 10 ausgerüstet, welche vorzugsweise im Prozessluftkreislauf angeordnet ist. Die Lichtquelle 11 dient wiederum zum Aktivieren des Katalysators.

In der Ausführung nach Fig. 4 ist die Katalysatorstrecke 10 im Prozessluftkreislauf zwischen der Heizvorrichtung 42 und der Trommel 40 angeordnet, da dort der Flusenanteil in der Luft gering ist und damit Probleme aufgrund von Verschmutzung minimiert werden können.

Durch den Einsatz des Photokatalysators im Wäschetrockner kann unangenehmer Geruch in der Wäsche reduziert werden, und zudem können Keime abgetötet werden.

### Fünfte Ausführung, Wäschetrockenschrank

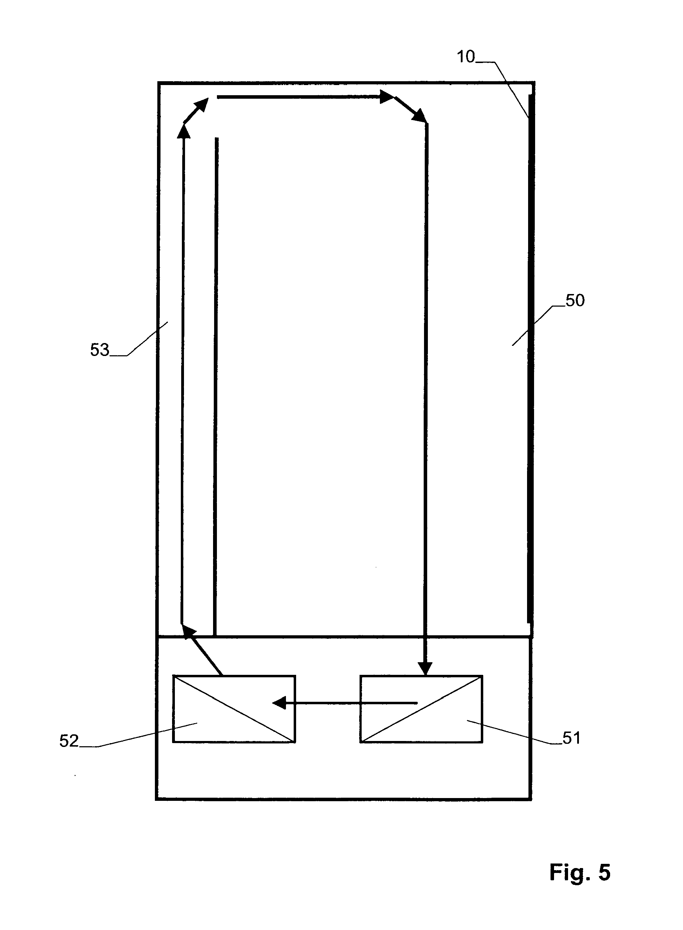

Fig. 5 zeigt einen Wäschetrockenschrank und/oder Wäscheauffrischungsschrank, in welchen ruhende Wäsche zum Trocknen oder Auffrischen (z.B. zum Entfernen von Gerüchen oder zum Entknittern) eingebracht wird. Diese Ausführung ist recht ähnlich zum oben beschriebenen Wäschetrockner, mit dem Unterschied, dass anstelle der drehenden Trommel ein Wäscheschrank 50 als Raum zur Aufnahme der Wäsche eingesetzt wird. Im Prozessluftkreislauf wird die Luft aus dem Wäscheschrank 50 zirkuliert und gelangt zunächst zu einer Kühlvorrichtung 51, von wo sie zu einer Heizvorrichtung 52 und über einen Steigkanal 53 zurück in den Wäscheschrank 50 gefördert wird. Kühlvorrichtung 51 und Heizvorrichtung 52 werden wiederum vorzugsweise von einer Wärmepumpe (nicht gezeigt) betrieben und dienen dazu, die Luft durch Abkühlen zu trocknen und sodann wieder zu erwärmen.

Die Katalysatorstrecke 10 befindet sich bevorzugt innerhalb des Wäscheschranks 50. Dazu werden Teile von einer oder mehreren Wandflächen, alternativ oder additiv Teile von Trennflächen bzw. Lüftführungsflächen (z.B. des Steigkanals 53) mit photokatalytischem Material beschichtet.

Weiter kann die Katalysatorstrecke 10 in der Luftstrecke ausserhalb des eigentlichen Schrankes, also z.B. im Schranksockel untergebracht werden. Ein bevorzugter Ort ist die Steigleitung 53 zwischen der Heizvorrichtung 52 und dem Wäscheschrank 50.

Wird der Schrank gemäss Fig. 5 nur als Wäscheauffrischungsschrank verwendet, so können die Kühlvorrichtung 51 und die Heizvorrichtung 52 auch entfallen, wenn kein Wasserentzug gewünscht ist.

Denkbar ist es auch, dass ein Dampfgenerator vorgesehen ist, um die Wäsche zu Bedampfen, insbesondere um diese zu entknittern oder aufzufrischen. Der Dampfgenerator kann auch im Wäschetrockner gemäss vorangehender Ausführung eingesetzt werden.

Grundsätzlich ist es von Vorteil, im Wäschetrockenschrank bzw. Wäscheauffrischungsschrank einen Prozessluftkreislauf vorzusehen. Dieser kann jedoch auch entfallen.

### Sechste Ausführung, Dunstabzug

Eine Katalysatorstrecke der oben beschriebenen Art kann auch in einem Dunstabzug angeordnet werden, d.h. in einem über der Kochstelle angeordneten Gerät, mit welchem das von der Kochstelle aufsteigende Luftgemisch abgesogen werden können. In einem solchen Gerät kann der Photokatalysator insbesondere dazu verwendet werden, Gerüche im abgesaugten Luftgemisch zu minimieren. Vorzugsweise wird die Katalysatorstrecke nach dem in den Dunstabzug eingesetzten Filter angeordnet, um Probleme aufgrund von Verschmutzung zu minimieren.

Um die Wirkung der Katalysatorstrecke zu erhöhen, ist diese wiederum vorzugsweise gefaltet oder aufgerollt, z.B. mäanderförmig, spiralförmig oder helixförmig ausgestaltet.

Die Verwendung einer Katalysatorstrecke ist sowohl für Dunstabzüge, welche die Luft ins Freie fördern, wie auch insbesondere für solche, die die Luft in die Küche zurückblasen, sinnvoll.

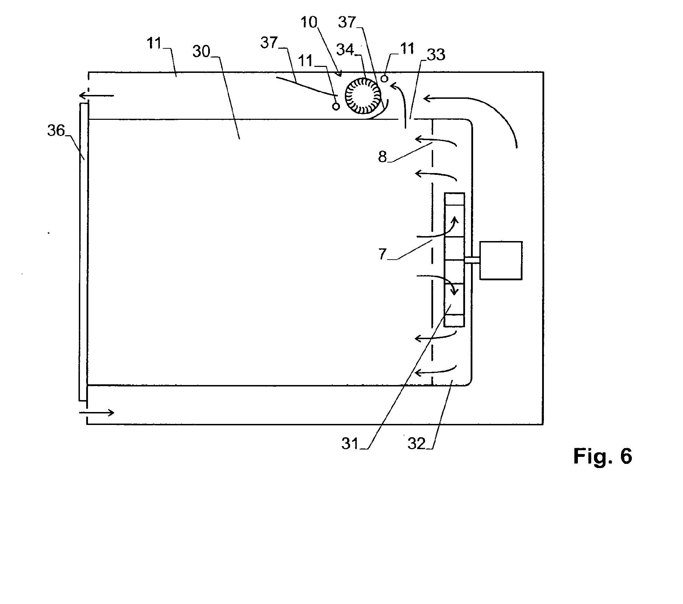

Photokatalysator beim Fördermittel:
Eine weitere Ausführung der Erfindung, als Beispiel in Form eines Backofens, ist in Fig. 6 dargestellt. Diese Ausführung unterscheidet sich von jener gemäss Fig. 3 dadurch, dass der Photokatalysator im Bereich des Lüfters 34 angeordnet ist. Der Vorteil der Anordnung des Photokatalysators an diesem Ort liegt darin, dass im Bereich des Lüfters ein guter Kontakt zwischen den Oberflächen der Geräteteile und dem zu fördernden Gas bzw. Fluid besteht.

Insbesondere kann der Photokatalysator an den Flügeln des Lüfters und/oder an mindestens einer Innenseite des Gehäuses, in welchem der Lüfter bzw. das Fördermittel angeordnet ist, aufgebracht sein. Dabei ist unter "Gehäuse" ein Gehäuse zu verstehen, das die Luft bzw. das Fluid im Bereich des Fördermittels führt. Ebenso kann der Katalysator zusätzlich oder alternativ auf Luftführungsblechen 37 beim Lüfter 34 angeordnet sein. Im Falle eines Querstromlüfters, wie in Fig. 6 dargestellt, können als Lichtquelle 11 beispielsweise eine oder mehrere stabförmige Bauteile vorgesehen sein, deren Längsachse(n) parallel zur Drehachse des Querstromlüfters angeordnet ist, so dass der Querstromlüfter bzw. dessen Gehäuse und/oder Leitbleche über die ganze Breite beleuchtet werden können.

Auch bei anderen Lüftertypen, wie z.B. Radial- oder Axiallüftern, kann am Lüfter selbst, und/oder am Lüftergehäuse oder an Leitblechen beim Lüfter ein Photokatalysator auf mindestens einen Teil der Oberflächen aufgebracht werden. Beispielsweise kann ein Photokatalysator am oder beim Gebläse 43 des Wäschetrockners von Fig. 4 vorgesehen sein.

Diese Technik kann auch bei Flüssigkeitspumpen eingesetzt werden, wie z.B. bei der Zirkulationspumpe 26 der Waschmaschine nach Fig. 2 oder der Zirkulationspumpe 4 des Geschirrspülers nach Fig. 1.

Bemerkungen:
In den obigen Beispielen wurde erwähnt, dass mit dem Photokatalysator organische Verbindungen abgebaut und Mikroorganismen abgetötet werden können. Zusätzlich oder alternativ hierzu kann auch Ozon oder Wasserstoffperoxid erzeugt werden, wodurch ebenfalls Keim abtötende sowie reinigende oder bleichende Wirkung erreicht wird.

Grundsätzlich kann der Photokatalysator dazu verwendet werden, im Haushaltgerät ein Luftgemisch oder auch Wasser bzw. ein Wassergemisch aufzubereiten.

Der Photokatalysator kann auch auf einem Filter angeordnet werden. Dadurch kann er eine sehr grosse Oberfläche haben, und zudem kann dank der katalytischen Wirkung das Filter gereinigt und/oder entkeimt werden.

Der Photokatalysator kann z.B. in Form einer Oberflächenbeschichtung vorliegen, welche z.B. als Aufstrich hergestellt wurde.

Der Photokatalysator kann z.B. photokatalytisch beschichtete und/oder mit photokatalytischem Material angereicherte Teilflächen der Wände und/oder Decke und/oder des Bodens und/oder Trennflächen und/oder Luftleitflächen aufweisen.

Der Photokatalysator kann weiter, wie z.B. im oben erwähnten Produkt "Titan Shield" als Nanopartikel, insbesondere aus TiO₂, vorliegen, welche z.B. an einer Oberfläche gehalten sind oder in das Material, z.B. Kunststoff, als Zusatz beigemischt werden.

Die Lichtquelle muss eine Wellenlänge haben, die für das Aktivieren des Katalysators geeignet ist. Für auf Titanoxid basierende Photokatalysatoren kann die Wellenlänge z.B. in einem Bereich von 350 bis 500 nm liegen. Als Lichtquelle können z.B. Fluoreszenzlichtquellen oder LEDs eingesetzt werden.

Der Photokatalysator kann auch eine Beschichtung auf der ersten Seite eines Trägers umfassen, welcher für das Licht der Lichtquelle mindestens teilweise transparent ist. In diesem Falle kann die Lichtquelle auf eine der ersten Seite gegenüber liegenden Seite des Trägers angeordnet sein, so dass deren Licht durch den Träger hindurch auf die Beschichtung fällt. Diese Ausführung hat u.a. den Vorteil, dass die Lichtquelle mit Hilfe des Trägers räumlich vom Fluid getrennt werden kann. Beispielsweise kann das Fluid durch einen Kanal oder ein Gehäuse geführt werden, wie z.B. ein Lüftergehäuse, der bzw. das von aussen beleuchtet ist und mindestens teilweise aus einem für das Licht der Lichtquelle transparentem Glas oder Kunststoff besteht.

Weiter kann der Photokatalysator auch in Tanks für Prozesswasser eingesetzt werden, z.B. im Wassertank eines Geschirrspülers oder einer Waschmaschine. Derartige Tanks in solchen Geräten sind dem Fachmann bekannt und dienen dazu, den Wasser- oder Energieverbrauch dieser Geräte zu reduzieren. Durch den Einsatz des Photokatalysators kann der Tank entkeimt werden.

## Patentansprüche

1. Haushaltgerät **gekennzeichnet durch** einem Photokatalysator und eine Lichtquelle zum Aktivieren des Photokatalysators.

2. Haushaltgerät nach Anspruch 1, wobei es eine Katalysatorstrecke (10) zwischen einem Anfangs- und einem Endpunkt aufweist, entlang welcher der Photokatalysator angeordnet ist, wobei das Haushaltgerät dazu ausgestaltet ist, ein Fluid vom Anfangs- zum Endpunkt durch die Katalysatorstrecke (10) zu fördern, und wobei ein Pfad des Fluids durch die Katalysatorstrecke (10) länger ist als der Abstand zwischen Anfangs- und Endpunkt, und insbesondere wobei mindestens ein Teil der Katalysatorstrecke (10) mäanderförmig, spiralförmig oder helixförmig verläuft.

3. Haushaltgerät nach einem der vorangehenden Ansprüche, wobei das Haushaltgerät dazu ausgestaltet ist, ein Fluid in einem Zyklus wiederholt dem Photokatalysator entlang zu führen.

4. Haushaltgerät nach einem der vorangehenden Ansprüche, wobei das Haushaltgerät dazu ausgestaltet ist, ein Luftgemisch dem Photokatalysator entlang zu führen.

5. Haushaltgerät nach Anspruch 4, wobei das Haushaltgerät ein Backofen mit einer Muffel (30) ist und wobei es dazu ausgestaltet ist, Luft von der Muffel (30) am Photokatalysator entlang zu führen.

6. Haushaltgerät nach Anspruch 5, wobei es dazu ausgestaltet ist, Luft von der Muffel am Photokatalysator entlang zu führen und sodann an die Umgebung abzugeben, oder wobei die Luft von der Muffel (30) zum Heizen durch einen Heizraum (31) zirkulierbar ist und im die Katalysatorstrecke (10) im Heizraum (31) angeordnet ist.

7. Haushaltgerät nach Anspruch 4, wobei das Haushaltgerät ein Dunstabzug ist und wobei es dazu ausgestaltet ist, angesaugte Luft am Photokatalysator entlang zu führen.

8. Haushaltgerät nach Anspruch 4, wobei das Haushaltgerät ein Wäschetrockner, Wäschetrockenschrank und/oder Wäscheauffrischungsschrank mit einem Raum (40, 50) zur Aufnahme der zu Wäsche ist und,
und insbesondere wobei es einen Prozessluftkreislauf zum Führen von Trocknungsluft durch die Trommel (40) aufweist, wobei die Katalysatorstrecke (10) im Prozessluftkreislauf angeordnet ist.

9. Haushaltgerät nach Anspruch 8, wobei im Prozessluftkreislauf eine Kühlvorrichtung (41) und eine Heizvorrichtung (42) angeordnet sind, wobei die Katalysatorstrecke (10) im Prozessluftkreislauf zwischen der Heizvorrichtung (42) und dem Raum (40, 50) angeordnet ist.

10. Haushaltgerät nach einem der Ansprüche 8 oder 9 mit einem Dampfgenerator zum Entknittern und/oder Auffrischen der Wäsche.

11. Haushaltgerät nach einem der Ansprüche 1 bis 4, wobei das Haushaltgerät eine Waschmaschine oder ein Geschirrspüler ist, in welchem ein zu reinigendes Gut mit Prozesswasser beaufschlagt wird, wobei das Haushaltgerät dazu ausgestaltet ist, das Prozesswasser am Photokatalysator entlang zu führen.

12. Haushaltgerät nach Anspruch 11, wobei das Haushaltgerät einen Prozesswasserkreislauf aufweist, in welchem das Prozesswasser zyklisch umgepumpt wird, wobei der Photokatalysator im Prozesswasserkreislauf angeordnet ist.

13. Haushaltgerät nach Anspruch 12, wobei das Haushaltgerät ein Geschirrspüler ist mit einem Bottich (1) zur Aufnahme des Geschirrs, mindestens einen im Bottich angeordneten Sprüharm (2), einer Zirkulationsleitung (4a) von einem Bodenbereich (3) des Bottichs (1) zum Sprüharm (2) und einer Pumpe (4) zum Fördern des Prozesswassers durch die Zirkulationsleitung (4a), wobei der Photokatalysator an der Zirkulationsleitung (4a) angeordnet ist.

14. Haushaltgerät nach einem der Ansprüche 1 bis 4 oder 11 bis 13, wobei das Haushaltgerät ein Geschirrspüler oder eine Waschmaschine mit einem Bottich (1, 21) zur Aufnahme des Geschirrs bzw. der Wäsche ist, wobei das Haushaltgerät dazu ausgestaltet ist, Luft vom Bottich (1, 21) mit dem Photokatalysator in Kontakt zu bringen.

15. Haushaltgerät nach einem der vorangehenden Ansprüche, wobei das Haushaltgerät ein Fördermittel (4, 26, 34, 43) zum Fördern des Fluids aufweist und wobei mindestens ein Teil des Photokatalysators beim oder am Fördermittel (4, 26, 34, 43) angeordnet ist, und insbesondere dass mindestens ein Teil des Photokatalysators an einem zu einer Bewegung angetriebenen Teil des Fördermittels (4, 26, 34, 43) angeordnet ist.

16. Haushaltgerät nach Anspruch 15, wobei das Fördermittel (4, 26, 34, 43) in einem Gehäuse angeordnet ist, wobei das Gehäuse das Fluid im Bereich des Fördermittels (4, 26, 34, 43) führt, wobei mindestens ein Teil des Photokatalysators an einer Innenseite des Gehäuses angeordnet ist.

17. Haushaltgerät nach einem der vorangehenden Ansprüche, wobei der Photokatalysator Titanoxid aufweist und/oder Nanopartikel aufweist, und oder wobei der Photokatalysator dazu geeignet ist, unter Beleuchtung organische Verbindungen abzubauen.

18. Haushaltgerät nach einem der vorangehenden Ansprüche, wobei das Haushaltgerät ein Filter aufweist, und wobei der Photokatalysator auf dem Filter angeordnet ist und/oder wobei das Haushaltgerät einen Tank aufweist und der Photokatalysator im Tank angeordnet ist.

19. Haushaltgerät nach einem der vorangehenden Ansprüche, wobei der Photokatalysator photokatalytisch beschichtete und/oder mit photokatalytischem Material angereicherte Teilflächen der Wände und/oder Decke und/oder des Bodens und/oder Trennflächen und/oder Luftleitflächen aufweist.

20. Haushaltgerät nach einem der vorangehenden Ansprüche, wobei der Photokatalysator eine Beschichtung auf einer ersten Seite eines Trägers umfasst, und wobei die Lichtquelle (11) auf einer der ersten Seite gegenüber liegenden Seite des Trägers angeordnet ist, so dass deren Licht durch den Träger hindurch auf die Beschichtung fällt, wobei der Träger für das Licht mindestens teilweise transparent ist, und insbesondere wobei der Träger das Fluid von der Lichtquelle (11) trennt.
